# EUROPÄISCHE PATENTANMELDUNG

(11) **EP 2 772 496 A1**
(43) Veröffentlichungstag der Anmeldung: **03.09.2014**
(21) Anmeldenummer: 13157278.6
(22) Anmeldetag: 28.02.2013
(51) Int. Cl.: C07F 7/22, B01J 31/26, C08G 18/24

(54) **Direktsynthese von Zinn(II)- und Zinn(IV)-Alkoxiden aus elementarem Zinn und Alkoholen in Gegenwart von Aktivierungsreagenzien**

(71) Anmelder: Bayer MaterialScience AG, 51368 Leverkusen (DE)
(72) Erfinder: Richter, Frank, 51373 Leverkusen (DE); Jurkschat, Klaus, 44379 Dortmund (DE); Iokova-Berends, Ljuba, 44225 Dortmund (DE); Zöller, Thomas, 44137 Dortmund (DE)
(74) Vertreter: Michalski Hüttermann & Partner Patentanwälte mbB

(57) **Zusammenfassung**

Ein Verfahren zur Herstellung von Zinnverbindungen durch Reaktion von elementarem Zinn mit einer Hydroxylgruppen umfassenden Verbindung. 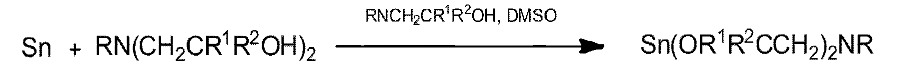 Das Verfahren ist gekennzeichnet durch die Gegenwart eines Sauerstoff umfassenden Additivs, welches eine Dielektrizitätskonstante bei ≥ 20 °C bis ≤ 30 °C von ≥ 5 aufweist.
Das Additiv ist von der Hydroxylgruppen umfassenden Verbindung verschieden; Bevorzugte Additive sind polar-aprotische Lösungsmittelmoleküle wie DMSO, DMF oder Sulfolan, Amin-N-Oxide und/oder Pyridin-N-Oxid.
Ebenfalls beansprucht werden Verbindungen der folgenden Formel: 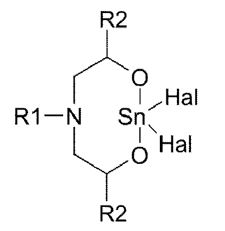 Besonders bevorzugte Produkte des Verfahrens sind Verbindungen der folgenden Formel:

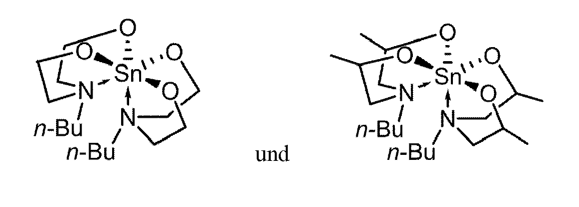

## Beschreibung

Die vorliegende Erfindung betrifft ein Verfahren zur Herstellung von Zinnverbindungen, umfassend den Schritt der Reaktion von Zinn mit einer Hydroxylgruppen umfassenden Verbindung, wobei die Reaktion in Gegenwart eines Additivs durchgeführt wird.

Zinn(II)- und Zinn(IV)-Alkoxide finden vielfältige Anwendungen, z.B. in der Sol-Gel-Chemie zur Darstellung von gemischten Elementoxiden (M. Guglielmi, M. Carturan, J. Non-Cryst. Solids, 1988, 103, 16). Eine spezielle Klasse der Zinnalkoxide sind die entsprechenden Ethanolaminderivate der Typen Sn(OCR¹R²CR³R⁴NR⁵R⁶)ₙ (R¹, R², R³, R⁴, R³, R⁶ = H, Alkyl, Aryl; n = 2, 4); Sn[(OCR¹R²CR³R⁴)₂NR⁵]ₙ (R¹, R², R³, R⁴, R⁵ = H, Alkyl, Aryl; n = 2, 4) und R⁵Sn[(OCR¹R²CR³R⁴)₃N (R¹, R², R³, R⁴ = H, Alkyl, Aryl; R⁵ = H, Alkyl, Aryl, Alkoholat, Thiolat, Carboxylat, Halogenid, OH). Diese Verbindungen bzw. ihre Derivate sind effiziente latente Katalysatoren für die Ring-Öffnungs-Polymerisation (ROP) von Lactid und verwandten Verbindungen und für die Polyurethanbildung (A. Kowalski, J. Libiszowski, A. Duda, S. Penczek, Macromolecules, 2000, 33, 1964; E. Amberger, M. R. Kula, Chem. Ber. 1963, 96, 2562).

Ein weiteres Beispiel für den Einsatz als Katalysatoren ist in WO 2011/051247 A1 gegeben.

Im Allgemeinen werden Zinnalkoxide durch Metathesereaktionen ausgehend von den Alkali- bzw. Erdalkalimetallsalzen der Alkohole und Zinnhalogeniden dargestellt (E. Amberger, M. R. Kula, Chem. Ber. 1963, 96, 2562):

SnX₂ + (3-n) (RO)ₙM → Sn(OR)₂ + (3-n) MXₙ

SnX₄ + (6-2m) (RO)ₘM → Sn(OR)₂+ (6-2m) MXₙ

(n, m = 1 oder 2; X = F, Cl, Br, Li; M = Li, Na, K, Mg, Ca; R = organischer Rest)

Zu den weiteren Methoden gehört die Reaktion von Zinnamiden mit Alkoholen (J. D. Andriamizaka, J. Escadie, C. Couret, J. Satge, Phosphorus and Sulfur and the related Elements, 1982, 12, 279; J. Cirobe, N. Voulgarakis, Zeitschrift für Naturforschung B, 1983, 38B, 269; D. Haensgen, H. Puff, N. Beckermann, J. Organomet. Chem., 1985, 293, 191):

Sn(NRR')ₙ + m R"OH → Sn(NRR')₍ₙ₋ₘ₎ (OR")ₘ + (n-m) HNRR'

(n, m = 1, 2, 3, 4; R, R', R", R'" = Alkyl, Aryl)

Ebenso möglich ist die Spaltung von Zinn-Kohlenstoffbindungen mit Alkoholen (P. G. Harrison, S. R. Stobart, J. Chem. Soc. 1973, 940):

SnRₙ + m R'OH → Sn(R)₍ₙ₋ₘ₎ (OR)ₘ + (n-m) RH

(n, m = 1, 2, 3, 4; R = CCH, Cp, Cp*; R' = Alkyl, Aryl)

In den klassischen Chemielehrbüchern (z.B. A. F. Hollemann, E. Wiberg, Lehrbuch der Anorganischen Chemie) und gesammelten Werken (z.B. Gmelins Handbuch der anorganischen Chemie) wird beschrieben, dass elementares Zinn nur mit starken Säuren unter Wasserstoffentwicklung reagiert.

Dem steht die jüngere Beobachtung entgegen (DE 10 2010 012237 A1), dass Zinnpulver unter anaeroben und wasserfreien Bedingungen in der Siedehitze mit einer Vielzahl von Alkoholen quantitativ zu den entsprechenden Zinn(II)-Alkoxiden reagiert: 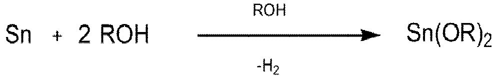 (R = Alkyl, Aryl)

Führt man dagegen die Reaktion unter nicht inerten Bedingungen (Gegenwart von Luftfeuchtigkeit) aus, resultieren die entsprechenden Zinn(IV)-Alkoxide in ebenfalls quantitativer Ausbeute (M. Scheer, Dissertation, Martin-Luther-Universität Halle-Wittenberg, 1982): 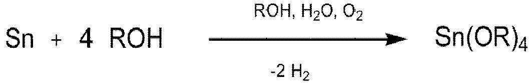 (R = Alkyl, Aryl)

Allerdings stellen die in der DE 10 2010 012237 angegebenen Reaktionszeiten von mehreren Tagen einen enormen Nachteil dar, der der technischen Umsetzung des Verfahrens bisher im Wege stand.

Die vorliegende Erfindung hat sich die Aufgabe gestellt, ein technisch besser umsetzbares Verfahren bereitzustellen.

Erfindungsgemäß gelöst wurde die Aufgabe durch ein Verfahren zur Herstellung von Zinnverbindungen, umfassend den Schritt der Reaktion von Zinn mit einer Hydroxylgruppen umfassenden Verbindung, wobei die Reaktion in Gegenwart eines Sauerstoff umfassenden Additivs durchgeführt wird, welches eine Dielektrizitätskonstante bei ≥ 20 °C bis ≤ 30 °C von ≥ 5 aufweist, wobei das Additiv von der Hydroxylgruppen umfassenden Verbindung verschieden ist und weiterhin aliphatische Alkohole, cycloaliphatische Alkohole, aromatische Alkohole und Wasser als Additiv ausgenommen sind.

Durch das erfindungsgemäße Verfahren gelingt die Direktsynthese von Zinnalkoxiden und anderen verwandten Verbindungen innerhalb akzeptabler Reaktionszeiten (< 12 h oder sogar < 6 h).

Die nach dem erfindungsgemäßen Verfahren zugänglichen Zinn(II)- und Zinn(IV)-Verbindungen sind mithin außerordentlich wertvolle Verbindungen für eine Reihe von Anwendungen, insbesondere in der Katalyse. Hier können sie rein oder in Abmischung mit anderen Hilfs- und Zuschlagstoffen wie z.B. Lösungsmitteln, Trägermaterialien für die Homogenkatalyse etc. eingesetzt werden.

Das in der Reaktion verwendete Zinn kann grundsätzlich in allen Modifikationen, sprich α-Zinn, β-Zinn oder γ-Zinn, eingesetzt werden. Weiterhin ist es nicht ausgeschlossen, dass in dem eingesetzten Zinn noch weitere Legierungsbestandteile oder andere herstellungsbedingte Verunreinigungen enthalten sind. Aus Gründen der Reaktionsökonomie ist es vorteilhaft, wenn das Zinn eine möglichst große Oberfläche aufweist und somit in Form eines Pulvers, von Granalien oder einer Folie zum Einsatz kommt.

Die Hydroxylgruppen umfassende Verbindung kann neben einer oder mehreren OH-Gruppen noch weitere zur Koordination an ein Metallatom befähigte Gruppen enthalten. Beispiele sind Thioether- oder Thioleinheiten sowie Phosphan- oder Amineinheiten (jeweils primär, sekundär oder tertiär). Für die erfindungsgemäße Reaktion eignen sich somit prinzipiell alle geradkettigen oder verzweigten Alkohole ROH mit R = Alkyl, Aryl, Aralkyl, die ggf. in den Substituenten R weitere Atome oder Atomgruppierungen, insbesondere weitere OH-Gruppen und/oder Donoratome (N, P, S) aufweisen können.

Erfindungsgemäß ist weiterhin vorgesehen, dass die Reaktion in Gegenwart eines Sauerstoff umfassenden Additivs durchgeführt wird, welches eine Dielektrizitätskonstante bei ≥ 20 °C bis ≤ 30 °C von ≥ 5 aufweist. Die Dielektrizitätskonstante wird hierbei auf die übliche Art und Weise bestimmt: das Verhältnis der Kapazitäten eines Kondensators, der einmal mit der Substanz als Dielektrikum vorliegt und einmal ein nur ein Vakuum als Dielektrikum aufweist.

Ebenfalls ist vorgesehen, dass hinsichtlich des Additivs aliphatische Alkohole, cycloaliphatische Alkohole, aromatische Alkohole (insbesondere Phenole) und Wasser ausgenommen sind. Nicht berücksichtigt werden selbstverständlich technisch nicht vermeidbare Spuren und Verunreinigungen.

Beispiele für verschiedene Dielektrizitätskonstanten sind in der nachfolgenden Tabelle angegeben:

| Lösungsmittel | Dielektrizitätskonstante bei | °C |
|---|---|---|
| n-Hexan | 1,9 | 25 |
| n-Heptan | 2,0 | 25 |
| Cyclohexan | 2,0 | 20 |
| 1,4-Dioxan | 2,2 | 25 |
| Tetrachlorkohlenstoff | 2,2 | 20 |
| Benzol | 2,3 | 25 |
| Tetrachlorethen | 2,3 | 25 |
| Toluol | 2,4 | 25 |
| Triethylamin | 2,4 | 25 |
| Schwefelkohlenstoff | 2,6 | 20 |
| Trichlorethen | 3,4 | 16 |
| Anisol | 4,3 | 25 |
| Dibutylether | 4,3 | 20 |
| Diethylether | 4,3 | 20 |
| Chloroform | 4,8 | 20 |
| Brombenzol | 5,4 | 25 |
| Chlorbenzol | 5,6 | 25 |
| Piperidin | 5,8 | 20 |
| Essigsäureethylester | 6,0 | 25 |
| Eisessig | 6,2 | 20 |
| Anilin | 6,9 | 20 |
| Ethylenglycoldimethylether | 7,2 | 25 |
| Triethylenglycoldimethylether (Triglyme) | 7,5 | 25 |
| 1,1,1-Trichlorethan | 7,5 | 20 |
| Tetrahydrofuran | 7,6 | 25 |
| Diethylenglycol | 7,7 | 25 |
| Methylenchlorid | 8,9 | 25 |
| Chinolin | 9,0 | 25 |
| Ethylendichlorid | 10,4 | 25 |
| Pyridin | 12,4 | 21 |
| 2-Methyl-2-propanol (tert-Butanol) | 12,5 | 25 |
| 3-Methyl-1-butanol (Isoamylalkohol) | 14,7 | 25 |
| 1-Butanol | 17,5 | 25 |
| Methylethylketon (Butanon) | 18,5 | 20 |
| 2-Propanol (Isopropylalkohol) | 19,9 | 25 |
| Propanol | 20,3 | 25 |
| Essigsäureanhydrid | 20,7 | 19 |
| Aceton | 20,7 | 25 |
| Triethylenglycol | 23,7 | 20 |
| Ethanol | 24,6 | 25 |
| Benzonitril | 25,2 | 25 |
| N-Methyl-2-pyrrolidon (NMP) | 32,2 | 25 |
| Methanol | 32,7 | 25 |
| Nitrobenzol | 34,8 | 25 |
| Nitromethan | 35,9 | 30 |
| Dimethylformamid | 37,0 | 25 |
| Acetonitril | 37,5 | 20 |
| Ethylenglycol | 37,7 | 25 |
| Dimethylacetamid | 37,8 | 25 |
| γ-Butyrolacton | 39,1 | 25 |
| Sulfolan | 43,3 | 30 |
| Dimethylsulfoxid | 46,7 | 25 |
| Propylencarbonat (4-Methyl-1,3-dioxol-2-on) | 65,1 | 25 |
| Wasser | 78,4 | 25 |
| Formamid | 111,0 | 20 |
| N-Methylformamid | 182,4 | 25 |

Vorzugsweise ist diese Dielektrizitätskonstante des Additivs ≥ 5 bis ≤ 200, mehr bevorzugt ≥ 20 bis ≤ 190, besonders bevorzugt ≥ 30 bis ≤ 185.

Als konkretes Beispiel für ein erfindungsgemäßes Verfahren sei der Fall genannt, in dem in der Siedehitze des entsprechenden Alkohols und in Gegenwart einer katalytischen Menge DMSO Zinnpulver an der Luft zu der entsprechenden Zinn(II)-Verbindung reagiert: 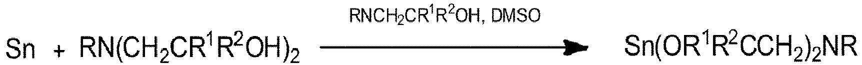 (R, R¹, R² bezeichnen hier unabhängig voneinander H, Alkyl, Aryl, funktionalisierte Reste)

Die nachfolgend beschriebenen Ausführungsformen der vorliegenden Erfindung können beliebig miteinander kombiniert werden, sofern sich aus dem Kontext nicht eindeutig das Gegenteil ergibt.

In einer Ausführungsform des erfindungsgemäßen Verfahrens ist die Hydroxylgruppen umfassende Verbindung ein mehrwertiger Alkohol oder ein Aminoalkohol.

Insbesondere geeignet sind Alkanolamine R¹N(XOH)₂, in denen R¹ für H, geradkettiges oder verzweigtes C₁-C₂₀-Alkyl, substituiertes oder unsubstituiertes C₆-C₃₀-Cycloalkyl bzw. substituiertes oder unsubstituiertes C₆-C₃₀-Aryl sowie XOH stehen kann und X folgende Bedeutung hat: geradkettiges oder verzweigtes, zwischen N und O 2 oder 3 C-Atome aufweisendes Alkylen oder das N- mit dem O-Atom über ein C₂-Segment ("ortho") verknüpfendes C₆-C₃₀-Arylen.

Besonders bevorzugt sind 2,2'-(Methylimino)diethanol, 2,2'-(Ethylimino)diethanol, 2,2'-(Propylimino)diethanol, 2,2'-(Butylimino)diethanol, 2,2'-(Hexylimino)diethanol, 2,2'-(Octylimino)diethanol, 1,1'-(Methylimino)dipropan-2-ol, 1,1'-(Ethylimino)dipropan-2-ol, 1,1'-(Propylimino)dipropan-2-ol, 1 , 1 '-(Butylimino)dipropan-2-ol, 1,1'-(Hexylimino)dipropan-2-ol und/oder 1,1'-(Octylimino)dipropan-2-ol, wobei der Begriff "Propyl" und der aller höheren, N-gebundenen Alkylgruppen immer für alle in Betracht kommenden Isomere stehen soll.

In einer weiteren Ausführungsform umfasst das Additiv eine funktionelle Gruppe ausgewählt aus Element-Sauerstoff-Doppelbindung und/oder N-Oxid. Geeignete Element-Sauerstoff-Doppelbindungen sind zum Beispiel C=O, S=O oder P=O.

In einer weiteren Ausführungsform des erfindungsgemäßen Verfahrens ist das Additiv ein polaraprotisches Lösungsmittelmolekül, ein Amin-N-Oxid und/oder ein Pyridin-N-Oxid Beispiele sind offenkettige oder cyclische Dialkylsulfone (z.B. Sulfolan), Sulfoxide (z.B. Dimethylsulfoxid, DMSO), N,N-Dialkylformamide (z.B. Dimethylformamid, DMF), N,N-Dialkylacetamide (z.B. Dimethylacetamid, DMAc), Pyridinoxide (z.B. N-Pyridinoxid), N-Alkylpyrrolidone (z.B. N-Methylpyrrolidon, NMP, oder N-Ethylpyrrolidon, NEP).

In einer weiteren Ausführungsform des erfindungsgemäßen Verfahrens wird die Reaktion bei einer Temperatur von ≥ 100 °C bis ≤ 250 °C durchgeführt. Vorzugsweise beträgt die Reaktionstemperatur ≥ 150 °C bis ≤ 240 °C.

In einer weiteren Ausführungsform des erfindungsgemäßen Verfahrens wird die Reaktion weiterhin in Gegenwart von Wasser durchgeführt. Beispielsweise kann der Zusatz des Wassers 0,5 mol-% bis 2 mol-%, bezogen auf die Stoffmenge des Zinns, betragen.

In einer weiteren Ausführungsform des erfindungsgemäßen Verfahrens wird die Reaktion unter Ausschluss von Sauerstoff und Feuchtigkeit in einer Schutzgasatmosphäre durchgeführt. Durch solch ein Vorgehen lässt sich die Oxidationsstufe des Zinns gezielt beeinflussen.

In einer weiteren Ausführungsform des erfindungsgemäßen Verfahrens wird die Reaktion in einer Sauerstoff umfassenden Atmosphäre durchgeführt. Vorzugsweise handelt es sich um eine reine Sauerstoffatmosphäre (einschließlich technisch unvermeidlicher Spuren anderer Gase und Verunreinigungen). Beispielsweise verläuft in einer reinen Sauerstoff-Atmosphäre die Reaktion von (vorzugsweise pulverförmigem) Zinn mit sterisch nicht gehinderten Alkoholen (R, R¹, R² = unabhängig voneinander H, Alkyl, Aryl, funktionalisierte Reste) quantitativ zu der entsprechenden Zinn-IV-Spiro-Verbindung:

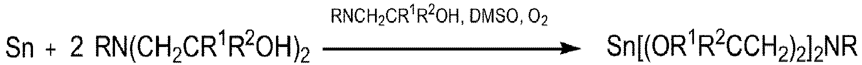

In einer weiteren Ausführungsform des erfindungsgemäßen Verfahrens wird das Additiv in einem molaren Verhältnis, bezogen auf das Zinn, von ≥ 0,05:1 bis ≤ 30:1 und vorzugsweise ≥ 0,5:1 bis ≤ 2:1 eingesetzt.

In einer weiteren Ausführungsform des erfindungsgemäßen Verfahrens wird das Zinn in Form eines Pulvers mit einem d₉₀-Wert der Partikelgrößenverteilung von ≥ 200 µm eingesetzt. Vorzugsweise liegt der d₉₀-Wert der Partikelgrößenverteilung im Bereich von ≥ 50 µm bis ≤ 200 µm Die Partikelgrößenverteilung kann mittels Laserstreuung ermittelt werden.

In einer weiteren Ausführungsform des erfindungsgemäßen Verfahrens umfasst dieses weiterhin den Schritt der Reaktion der erhaltenen Zinnverbindungen mit einem Oxidationsmittel. Durch nachträgliche Umsetzung der Sn(II)-Verbindungen (Stannylene) mit Oxidationsmitteln, bevorzugt Dihalogen, besonders bevorzugt Cl₂, sind auch am Zinnatom gemischt -O/Halogen-substituierte Verbindungen zugänglich, die alternativ nur z.B. über den Umweg einer partiellen Halogenid-Abspaltung (Metathese) aus primär eingesetzten Sn-IV-Halogeniden bisher zugänglich waren, was sowohl ökonomisch als auch verfahrenstechnisch und unter Aspekten der Produktreinheit (Salzanfall/Reinigungschritte) nachteilig ist. Diese Ausführungsform des erfindungsgemäßen Verfahrens vermeidet solche Nachteile.

Bevorzugte Verbindungen, die sich auf diese Weise erhalten lassen, weisen die folgende Struktur auf:

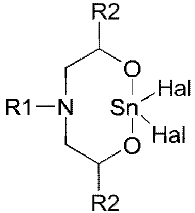

(Hal = Halogen, vorzugsweise Cl; R1, R2, R3 stehen hier unabhängig voneinander für H, Alkyl oder Aryl)

Ein weiterer Gegenstand der vorliegenden Erfindung sind Zinn(IV)-Verbindungen der allgemeinen Formel Sn[BuN(CHR1CHR2O)]₂, erhältlich durch ein erfindungsgemäßes Verfahren, wobei Bu für einen verzweigten oder unverzweigten Butylrest steht und R1 und R2 unabhängig voneinander Wasserstoff oder Alkyl sein können.

Es ist hierbei bevorzugt, dass Bu für n-Butyl steht, R1 für H steht und R2 für H oder Methyl steht. Man erhält die folgenden Strukturen:

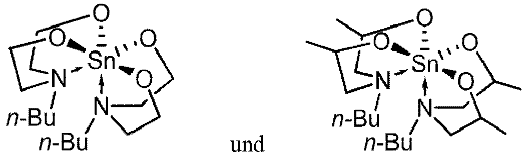

Weiterhin betrifft die Erfindung Zinn(IV)-Verbindungen, erhältlich durch ein erfindungsgemäßes Verfahren, mit der Formel: 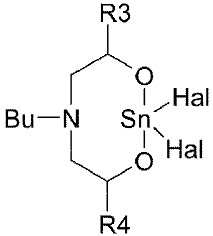 wobei Bu für einen verzweigten oder unverzweigten Butylrest steht, R3 und R4 unabhängig voneinander Wasserstoff oder Alkyl sein können und Hal für Halogenid steht.

Hier ist es bevorzugt, dass Bu für n-Butyl steht, R3 und R4 für Methyl stehen und Hal für Chlorid steht.

Die erfindungsgemäßen Zinn(IV)-Verbindungen der beiden zuvor beschriebenen Gruppen können als Katalysatoren für die Herstellung von Polyurethan-Polymeren verwendet werden.

Die vorliegende Erfindung wird anhand der nachfolgenden Beispiele näher beschrieben, ohne jedoch darauf beschränkt zu sein.

### Beispiel 1: Synthese von MeN(CH₂CH₂O)₂Sn

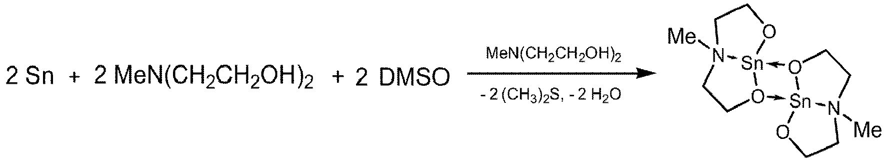

Elementares Zinnpulver (1 g, 8.4 mmol) wurde mit einem Überschuss an *N*-Methyldiethanolamin (16.85 mmol) und einer katalytischen Menge (0.05 bzw. 0.167 Äquivalente in einem weiteren Versuch) Dimethylsulfoxid für 5.5 Stunden auf 210 °C Ölbadtemperatur erwärmt.

Laut ¹¹⁹Sn-NMR besteht die Rohproduktreaktionslösung aus 79 bzw. 97 % MeN(CH₂CH₂O)₂Sn (δ = - 328 ppm) und 21 bzw. 3 % aus der Spiro-Verbindung [MeN(CH₂CH₂O)₂]₂Sn (δ = - 454 ppm). Diese werden durch Umkristallisieren aus siedendem Benzol getrennt. Die Zinn(II)-Verbindung wird als kristalliner farbloser Feststoff erhalten, der gut in polaren organischen Lösungsmitteln wie z.B. CH₂Cl₂ löslich ist. Die Ergebnisse der NMR-Untersuchungen korrelieren gut mit den Ergebnissen der NMR-Untersuchungen zu der Substanz, welche nach einer anderen Methode dargestellt wurde (-310 ppm in CD₂Cl₂; M. Scheer, Dissertation, Martin-Luther-Universität Halle-Wittenberg, 1982**;** T. Berends, L. Iovkova, G. Bradtmöller, I. Oppel, M. Schürmann, K. Jurkschat, ZAAC, 2009, 635, 369).

Die Molekülstruktur der auf diese Weise erhaltenen Verbindung entspricht der bereits publizierten Molekülstruktur (T. Berends, L. Iovkova, G. Bradtmöller, I. Oppel, M. Schürmann, K. Jurkschat, ZAAC, 2009, 635, 369).

¹H-NMR: (300.13 MHz, C₆D₆): δ 4.34 (br, 2H, OCH₂), 3.93 (br, 2H, OCH₂), 2.55 (br, 2H, CH₂N), 2.24 (br, 2H, CH₂N), 2.00 (s, 3H, NCH₃).

¹³C{¹H}-NMR: (100.63 MHz, C₆D₆): δ 60.0 (NCH₂), 58.4 (OCH₂), 41.52 (NCH₃).

¹¹⁹Sn{¹H}-NMR (111.89 MHz, C₆D₆): δ -310.

¹¹⁹Sn-CP-MAS-NMR (C₆D₆, 111.89 MHz): δᵢₛₒ -313.5, -315.3, -324.0, -327.8.

LC-ESI-MS: berechnet (m/z) für [C₁₀H₂₂N₂O₄Sn₂+H]⁺ 473.0, gefunden 473.1 (Dimer); [C₁₅H₁₁N₁O₂Sn₁+H]⁺ 238.0, gefunden 237.9 (Monomer).

Elementaranalyse: berechnet (%) für C₅H₁₁NO₂Sn: C 25.5, H 4.7, N 6.0; gefunden C 25.5, H 4.5, N 6.0.

Schmelzpunkt: 188 °C.

### Beispiel 2: Synthese von [MeN(CH₂CH₂O)₂]₂Sn

Elementares Zinnpulver (1 g, 8.4 mmol) wurde mit einem Überschuss an *N*-Methyldiethanolamin (16.85 mmol) und einem Äquivalent DMSO (8.4 mmol) 3 h in einer reinen Sauerstoffatmosphäre auf 210 °C erhitzt. Nach dem Destillieren der flüchtigen Bestandteile wurde [MeN(CH₂CH₂O)₂]₂Sn (2.9 g, 8.4 mmol) als farbloser amorpher Feststoff erhalten.

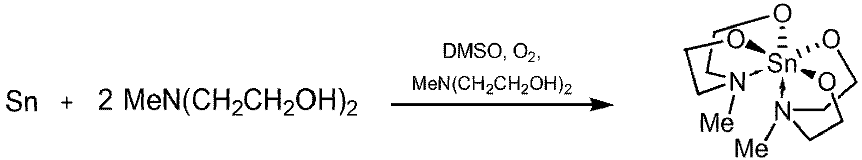

Der Rückstand wurde aus THF umkristallisiert und lieferte die Spiroverbindung als farblosen, kristallinen Feststoff.

Die Ergebnisse der NMR-Untersuchungen korrelieren gut mit den Ergebnissen der NMR-Untersuchungen zu der Substanz, welche nach einer anderen Methode dargestellt wurde (-449 ppm in CD₂Cl₂; T. Zöller, L. Iovkova-Berends, C. Dietz, T. Berends, K. Jurkschat, Chem. Eur. J. 2011,17, 2361)

Die Molekülstruktur der auf diese Weise erhaltenen Verbindung entspricht der bereits publizierten Molekülstruktur (T. Zöller, L. Iovkova-Berends, C. Dietz, T. Berends, K. Jurkschat, Chem. Eur. J. 2011,17, 2361).

¹H-NMR (CDCl₃, 400.13 MHz): δ 4.03-3.61 (m, 8H, OCH₂), 2.87-2.64 (m, 8H, NCH₂), 2.59 (s, 6H, NCH₃).

¹³C{¹H}-NMR (CDCl₃, 100.63 MHz): δ 57.4 (OCH₂ + NCH₂), 43.6 (NCH₃)

¹¹⁹Sn{¹H}-NMR (CDCl₃, 111.89 MHz): δ -451.

LC-ESI-MS: berechnet für m/z = 355.1 [C₁₀H₂₂N₂O₄Sn+H]⁺), gefunden 355.1.

Elementaranalyse: berechnet (%) für C₁₀H₂₂N₂O₄Sn C 34.0, H 6.3, N 7.9, *gefunden* C 33.9, H 6.3, N 7.5.

Schmelzpunkt: 118 °C.

### Beispiel 3: Synthese von [n-BuN(CH₂CH₂O)₂]₂Sn

Elementares Zinnpulver (1 g, 8.4 mmol) wurde mit einem Überschuss an *N*-Butyldiethanolamin (16.85 mmol) und einem Äquivalent DMSO (8.4 mmol) 3 h in einer reinen Sauerstoffatmosphäre auf 210 °C erhitzt. Nach dem Destillieren der flüchtigen Bestandteile im Vakuum wurde [*n-*BuN(CH₂CH₂O)₂]₂Sn (3.6 g, 8.4 mmol) in quantitativer Ausbeute als farbloser amorpher Feststoff erhalten.

Der Rückstand wurde aus THF/*n*-Hexan umkristallisiert und lieferte die Spiroverbindung als farblosen, kristallinen Feststoff.

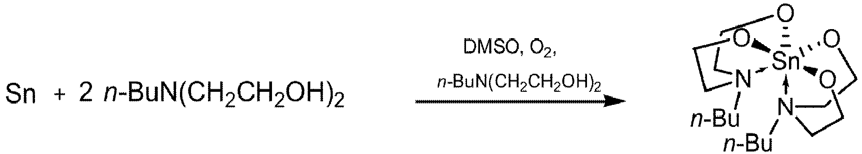

¹H-NMR (CDCl₃, 400.13 MHz): δ 3.87 (t, ³*J*CH-¹H) = 5.6 Hz, ³*J*(¹H-^{117/119}Sn) = 73.4 Hz, 8H, OCH₂), 2.93-2.72 (m, 12H, NCH₂), 1.55 (m, 4H, CH₂), 1.30 (m, 4H, CH₂), 0.93 (t, ³*J*(¹H-¹H) = 7.3 Hz, 6H, CH₃).

¹³C{¹H}-NMR (CDCl₃, 100.63 MHz): δ 57.7 (OCH₂), 54.2 (NCH₂), 53.1 (NCH₂), 24.7 (CH₂), 20.6 (CH₂), 13.9 (CH₃).

¹¹⁹Sn{¹H}-NMR (CDCl₃, 111.89 MHz): δ -450.

LC-ESI-MS: berechnet für m/z = 439.2 [C₁₆H₃₄N₂O₄Sn+H]⁺), gefunden 439.2.

Elementaranalyse: berechnet (%) für C₁₆H₃₄N₂O₄Sn C 43.9, H 7.8, N 6.4, *gefunden* C 41.6, H 8.0, N 6.0.

Schmelzpunkt: 98 °C.

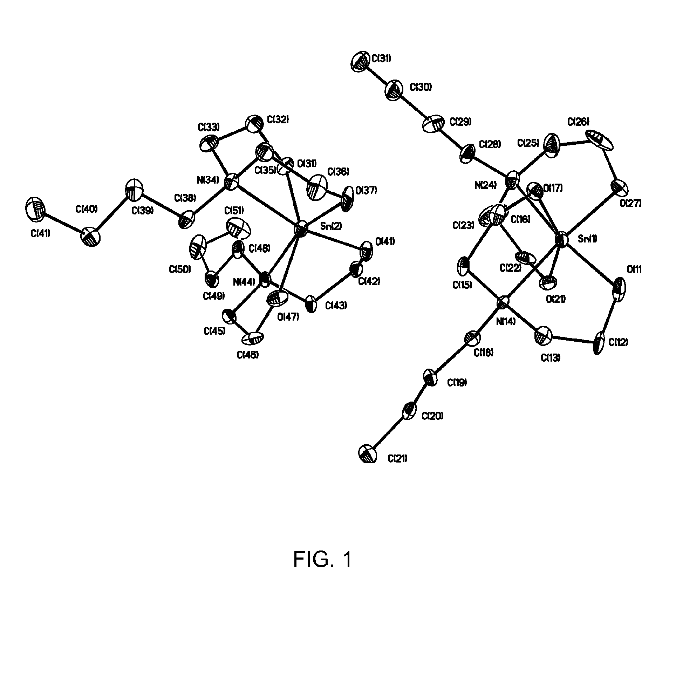

Die Verbindung kristallisiert triklin in der Raumgruppe P-1 mit vier Formaleinheiten in der Elementarzelle und zwei unabhängigen Zinnatomen in der asymmetrischen Einheit. Die Zinnatome in beiden Molekülen sind verzerrt oktaedrisch umgeben und tragen jeweils zwei Moleküle N-Butyldiethanolamin als Liganden. Die zwei Moleküle unterscheiden sich in der Konfiguration der *n-*Butylgruppe. Die mittels Röntgenstrukturanalyse ermittelte Struktur ist in FIG. 1 wiedergegeben.

Die Einkristallröntgenstrukturanalyse wurde auf einem Gerät vom Typ SMART CCD der Firma BrukerAXS mit Mo-K_{α}-Strahlung (0.71073 Å) bei 173(1) K aufgenommen. Zur Lösung der Struktur wurde die direkte Methode SHELXS97 (Sheldrick, G. M. Acta Cryst., 1990, A46, 467) und anschließende sukzessive Differenzfouriersynthese angewandt. Zur Verfeinerung wurde die Methode der kleinsten Fehlerquadrate SHELXL97 (Sheldrick, G. M. SHELXL97; University of Göttingen, Deutschland, 1997**)** angewandt. Atomstreufaktoren für neutrale Atome und Real- und Imaginärteile der Dispersion wurden den International Tables for X-Ray Crystallography (International Tables for X-Ray Crystallography, Dordrecht: Kluwer Academic Publishers, 1992; Teil C) entnommen. Die Abbildungen wurden mit dem Programm SHELXTL (Sheldrick, G. M. SHELXTL. Release 5.1 Software Reference Manual, BrukerXS; Inc., Madison, Wisconsin, USA, 1997) erstellt.

**Tabelle 1: Ausgewählte Bindungslängen der Verbindung [n-BUN(CH₂CH₂O)₂]₂Sn**

| Bindungslängen /Å | | | |
|---|---|---|---|
| Sn(1)-O(11) | 111.984(4) | Sn(2)-O(31) | 2.003(5) |
| Sn(1)-O(17) | 2.016(4) | Sn(2)-O(37) | 1.996(4) |
| Sn(1)-O(21) | 2.018(5) | Sn(2)-O(41) | 2.012(4) |
| Sn(1)-O(27) | 2.005(4) | Sn(2)-O(47) | 2.020(5) |
| Sn(1)-N(14) | 2.345(5) | Sn(2)-N(34) | 2.382(4) |
| Sn(1)-N(24) | 2.360(5) | Sn(2)-N(44) | 2.374(5) |

**Tabelle 2: Verzeichnis der kristallographischen Daten der Verbindung [n-BUN(CH₂CH₂O)₂]₂Sn**

| Summenformel | C₁₆H₃₄N₂O₄Sn |
|---|---|
| Molekulargewicht /g/mol | 437.14 |
| Kristallsystem | triklin |
| Kristallgröße | 0.40 x 0.08 x 0.06 |
| Raumgruppe | P-1 |
| a/Å | 11.8503(9) |
| b/Å | 12.7200(6) |
| c/Å | 12.8641(10) |
| α/° | 79.165(5) |
| β/° | 85.204(6) |
| γ/° | 83.998(5) |
| V/Å³ | 1890.0(2) |
| Z | 4 |
| ρ_{berechnet} g/m³ | 1.536 |
| *µ* /mm⁻¹ | 1.372 |
| F(000) | 904 |
| θ-Winkel /° | 2.27-29.27 |
| h, k, l Werte | -14 ≤ h ≤ 14 |
| | -17 ≤ k ≤ 16 |
| | -10 ≤ 1 ≤ 17 |
| Gemessene Reflexe | 15776 |
| Vollständigkeit bis θₘₐₓ | 99.9 |
| unabh. Reflexe/Rᵢₙₜ | 8661/0.0718 |
| Verfeinerungsparameter | 415 |
| GooF (F²) | 0.757 |
| R1 (F) (I>2σ(I)) | 0.0503 |
| wR2 (F²) | 0.0832 |
| Maximaler /minimaler Differenzpeak e/ Å³ | 0.834/-0.713 |

### Beispiel 4: Synthese von [n-BuN(CH₂C(H)MeO₂)₂]Sn

Elementares Zinnpulver (1 g, 8.4 mmol) wurde mit einem Überschuss an *N*-(butyl)-bis-(2-hydroxy-2-methylethyl)amin (16.85 mmol) und einem Äquivalent DMSO (8.4 mmol) 3 h in einer reinen Sauerstoffatmosphäre auf 210 °C erhitzt. Nach dem Filtrieren des nicht reagierten Zinn-Pulvers wurde der Umsatz auf 16 % bestimmt. Nachdem die Sn(IV)-Verbindung mit *n*-Hexan gefällt und filtriert wurde, wurde der Feststoff im Vakuum getrocknet. [*n*-BuN(CH₂C(H)MeO)₂]₂Sn resultiert als cremefarbener glasartiger Feststoff.

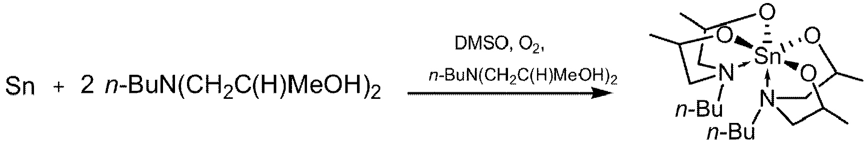

¹H-NMR (CDCl₃, 400.13 MHz): δ 3.92-3.88 (m, 8H, OCH), 2.79-2.65 (m, 12H, NCH₂), 1.59-1.49 (m, 4H, CH₂), 1.32-1.22 (m, 4H, CH₂), 1.23-1.08(unresolved signals 12H, CCH₃), 0.91 (t, ³*J*(¹H-¹H) = 7.3 Hz, 6H, CH₃).

¹³C{¹H}-NMR (CDCl₃, 100.63 MHz): δ 65.7, 65.4, 64.9, 64.5, 63.0, 62.1, 62.0, 61.3, 31.1, 25.5, 25.3, 23.3, 23.1, 22.3, 22.0, 21.3, 20.6, 20.5, 20.3, 13.9, 13.8.

¹¹⁹Sn{¹H}-NMR (CDCl₃, 111.89 MHz): δ -435, -440, -446 .

LC-ESI-MS: berechnet für m/z = 495.2 [C₁₆H₃₄N₂O₄Sn+H]⁺), gefunden 495.2.

Elementaranalyse: berechnet (%) für C₂₀H₄₂N₂O₄Sn C 48.7, H 8.6, N 5.7, *gefunden* C 49.2, H 9.1, N 5.3.

Schmelzpunkt: 72 °C.

### Beispiel 5: Synthese von [n-BuN(CH₂CMe₂O)₂]₂Sn

Elementares Zinnpulver (1 g, 8.4 mmol) wurde mit einem Überschuss an N-(butyl)-bis-(2-hydroxy-2,2-dimethylethyl)amin (16.85 mmol) und einem Äquivalent DMSO (8.4 mmol) 3 h in einer reinen Sauerstoffatmosphäre auf 210 °C erhitzt. Nach dem Filtrieren des nicht reagierten Zinn-Pulvers wurde der Umsatz auf 6 % bestimmt. Nachdem die Sn(IV)-Verbindung mit *n*-Hexan gefällt und filtriert wurde, wurde der Feststoff im Vakuum getrocknet. [*n*-BuN(CH₂CMe₂O)₂]₂Sn resultiert als weißer wachsartiger Stoff.

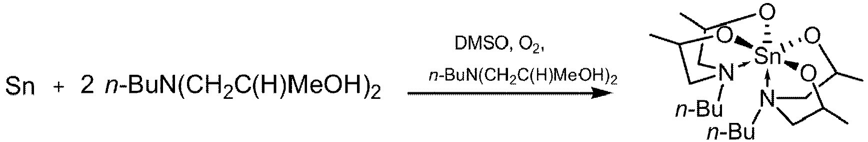

¹H-NMR (CDCl₃, 400.13 MHz): δ 2.79-2.71 (t, 4H, NCH₂(n-Bu)) 2.46 (s, 8H, NCH₂), 1.49-1.46 (m, 4H, CH₂), 1.34-1.26 (m, 4H, CH₂), 1.09 (s, 12H C(CH₃)₂), 0.93 (t, ³*J*(¹H-¹H) = 7.3 Hz, 6H, CH₃).

¹³C{¹H}-NMR (CDCl₃, 100.63 MHz): δ 54.3 (OC(CH₃)₂), 51.2 (NCH₂), 50.1 (NCH₂), 29.8 (OC(*C*H₃)₂),24.7 (CH₂), 20.6 (CH₂), 13.9 (CH₃).

¹¹⁹Sn{¹H}-NMR (CDCl₃, 111.89 MHz): δ -447.

LC-ESI-MS: berechnet für m/z = 551.3 [C₂₄H₅₀N₂O₄Sn+H]⁺), gefunden 551.4.

Elementaranalyse: berechnet. (%) für C₂₄H₅₀N₂O₄Sn C 52.4, H 9.3, N 5.1, *gefunden* C 52.0, H 9.2, N 5.0.

Schmelzpunkt: 68 °C.

**Tabelle 3: weitere Beispiele zur Synthese ausgewählter Zinnalkoxide, alle Versuche wurden einheitlich bei 210°C mit einem Gramm Zinn¹⁾ durchgeführt**

| Bsp. | Lösemittel | Reaktand (Alkohol)²⁾ [Äquiv. auf Sn] | Aktivierungsagenz [Äquiv. auf Sn] | Bedingungen¹⁾ | Zeit [h] | Umsatz [%]³⁾ | Zusammensetzung des Reaktionsgemisches lt_{.} ¹¹⁹Sn-NMR⁴⁾ | |
|---|---|---|---|---|---|---|---|---|
| | | | | | | | Stannylen | Spiroverbindung |
| 1A | = Reaktand | A [30] | DMSO [1] | a, Luft | 1,5 | 41 | 58 | 42 |
| 2A | = Reaktand | A [30] | DMSO [1] | a, Luft | 5,5 | 89 | 84 | 16 |
| 3A | = Reaktand + kat. H₂O | A [30] | DMSO [1] | a, Luft | 5,5 | 95 | 94 | 6 |
| 4A | = Reaktand | A [30] | DMSO [0,17] | a, Luft | 6,5 | 71 | 97 | 3 |
| 5A | = Reaktand + kat. H₂O | A [30] | DMSO [1] | b, Luft | 5,5 | 89 | 73 | 27 |
| 6A | = Reaktand | A [30] | DMSO [0,05] | b, Luft | 5,5 | 95 | 79 | 21 |
| 7A | = Reaktand | A [30] | DMSO [0,05] | c, Luft | 5,5 | 38 | | 100 |
| 8A | = Reaktand | A [30] | DMSO [1] | b, Luft | 3,5 | 67 | 93 | 7 |
| 9A | = Reaktand | A [30] | DMSO [1] | a, O₂-Atmosphäre | 3 | 100 | | 100 |
| 10A | = Reaktand + kat. H₂O | A [30] | DMSO [1] | a, O₂-Atmosphäre | 3 | 80 | | 100 |
| 11A | Xylol | A [2] | DMSO [1] | b, Luft | 5,5 | 7 | 31 | 69 |
| 12A | DMSO | A [2] | DMSO [33] | b, Luft | 5,5 | 29 | | 100 |
| 13A | = Reaktand | A [30] | DMSO [1] | c, Luft | 5,5 | 38 | | 100 |
| 14A | = Reaktand | B [30] | DMSO [1] | a, O₂-Atmosphäre | 3 | 100 | | 100 |
| 15A | = Reaktand | C [30] | DMSO [1] | a, O₂-Atmosphäre | 3 | 16 | | 100 |
| 16A | = Reaktand | A [30] | DMF [1] | a, O₂-Atmosphäre | 3 | 32 | 94 | 6 |
| 17A | = Reaktand | A [30] | Pyridin-N-oxid [1] | a, O₂-Atmosphäre | 3 | 80 | | 100 |
| 18A | = Reaktand | A [30] | Sulfolan [1] | a, O₂-Atmosphäre | 3 | 95 | | 100 |
| 19A | = Reaktand | A [30] | NMP [1] | a, Luft | 3,5 | 100 | 98 | 2 |

| | | | | | | | | |
|---|---|---|---|---|---|---|---|---|
| ¹⁾ a) α-Zinn (Pulver), b) β-Zinn (Pulver), c) β-Zinn (Granalien) ²⁾ A: 2,2'-(Methylimino)diethanol; B: 2,2'-(Butylimino)diethanol; C: 1,1'-(Butylimino)dipropan-2-ol ³⁾ bezogen auf eingesetztes Zinn ⁴⁾ Stannylen ca. -327 ppm, Spiroverbindung ca. -453 ppm | | | | | | | | |

## Patentansprüche

1. Verfahren zur Herstellung von Zinnverbindungen, umfassend den Schritt der Reaktion von Zinn mit einer Hydroxylgruppen umfassenden Verbindung, **dadurch gekennzeichnet, dass** die Reaktion in Gegenwart eines Sauerstoff umfassenden Additivs durchgeführt wird, welches eine Dielektrizitätskonstante bei ≥ 20 °C bis ≤ 30 °C von ≥ 5 aufweist, wobei das Additiv von der Hydroxylgruppen umfassenden Verbindung verschieden ist und weiterhin aliphatische Alkohole, cycloaliphatische Alkohole, aromatische Alkohole und Wasser als Additiv ausgenommen sind.

2. Verfahren gemäß Anspruch 1, wobei die Hydroxylgruppen umfassende Verbindung ein mehrwertiger Alkohol oder ein Aminoalkohol ist.

3. Verfahren gemäß Anspruch 1 oder 2, wobei das Additiv eine funktionelle Gruppe ausgewählt aus Element-Sauerstoff-Doppelbindung und/oder N-Oxid umfasst.

4. Verfahren gemäß einem oder mehreren der Ansprüche 1 bis 3, wobei das Additiv ein polaraprotisches Lösungsmittelmolekül, ein Amin-N-Oxid und/oder ein Pyridin-N-Oxid ist.

5. Verfahren gemäß einem oder mehreren der Ansprüche 1 bis 4, wobei die Reaktion bei einer Temperatur von ≥ 100 °C bis ≤ 250 °C durchgeführt wird.

6. Verfahren gemäß einem oder mehreren der Ansprüche 1 bis 5, wobei die Reaktion weiterhin in Gegenwart von Wasser durchgeführt wird.

7. Verfahren gemäß einem oder mehreren der Ansprüche 1 bis 6, wobei die Reaktion unter Ausschluss von Sauerstoff und Feuchtigkeit in einer Schutzgasatmosphäre durchgeführt wird.

8. Verfahren gemäß einem oder mehreren der Ansprüche 1 bis 7, wobei die Reaktion in einer Sauerstoff umfassenden Atmosphäre durchgeführt wird.

9. Verfahren gemäß einem oder mehreren der Ansprüche 1 bis 8, wobei das Additiv in einem molaren Verhältnis, bezogen auf das Zinn, von ≥ 0,05:1 bis ≤ 30:1 eingesetzt wird.

10. Verfahren gemäß einem oder mehreren der Ansprüche 1 bis 9, wobei das Zinn in Form eines Pulvers mit einem d₉₀-Wert der Partikelgrößenverteilung von ≤ 200 µm eingesetzt wird.

11. Verfahren gemäß einem oder mehreren der Ansprüche 1 bis 10, weiterhin umfassend den Schritt der Reaktion der erhaltenen Zinnverbindungen mit einem Oxidationsmittel.

12. Zinn(IV)-Verbindungen der allgemeinen Formel Sn[BuN(CHR1CHR2O)]₂, erhältlich durch ein Verfahren gemäß einem oder mehreren der Ansprüche 1 bis 10, wobei Bu für einen verzweigten oder unverzweigten Butylrest steht und R1 und R2 unabhängig voneinander Wasserstoff oder Alkyl sein können.

13. Zinn(IV)-Verbindungen gemäß Anspruch 12, wobei Bu für n-Butyl steht, R1 für H steht und R2 für H oder Methyl steht.

14. Zinn(IV)-Verbindungen, erhältlich durch ein Verfahren gemäß Anspruch 11, mit der Formel: 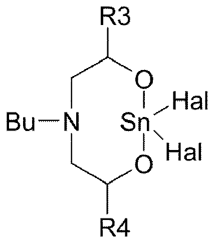 wobei Bu für einen verzweigten oder unverzweigten Butylrest steht, R3 und R4 unabhängig voneinander Wasserstoff oder Alkyl sein können und Hal für Halogenid steht.

15. Zinn(IV)-Verbindungen gemäß Anspruch 14, wobei Bu für n-Butyl steht, R3 und R4 für Methyl stehen und Hal für Chlorid steht.
